# EUROPEAN PATENT APPLICATION

(11) **EP 2 114 098 A1**
(43) Date of publication of application: **04.11.2009**
(21) Application number: 08008163.1
(22) Date of filing: 29.04.2008
(51) Int. Cl.: H04W 8/20

(54) **Subcriber identity module transceiver**

(71) Applicant: Koninklijke KPN N.V., 2516 CK The Hague (NL); Nederlandse Organisatie Voor Toegepast-Natuurweten, 2628 VK Delft (NL)
(72) Inventor: De Vries, Amout, 9742 ER Groningen (NL); Bastiaans, Allart Karei, 9402 RW Assen (NL)
(74) Representative: Wuyts, Koenraad Maria

(57) **Abstract**

The invention relates to making it easy to a multitude of subscribers to use one mobile phone or multiple mobile phones to be used by one subscriber, by using a SIM transceiver in the mobile phone(s).

## Description

### Field of the invention

The invention relates to field of telecommunications. More specifically, the invention addresses the point of facilitating the use of one or more mobile phones by a plurality of users.

### Background of the invention

It is common knowledge that a subscriber identity module (SIM) card is part of a removable smartcard integrated circuit card (ICC), for use in cellular telephony devices such as computers and mobile phones. SIM cards securely store the international mobile subscriber identity (IMSI) used to identify a subscriber.

The use of SIM cards is mandatory in Global System for Mobile communication (GSM) devices. The equivalent of a SIM in Universal Mobile Telecommunication System (UMTS) is called the Universal Subscriber Identity Module (USIM), whereas the Removable User Identity Module (RUIM) is more popular in devices that are based on Code Division Multiple Access (CDMA). The satellite phone networks Iridium, Thuraya Inmarsat's Broadband Global Area Network (BGAN) also use SIM cards. Sometimes these SIM cards work in regular GSM phones and also allow GSM subscribers to roam in satellite networks by using their own SIM card in a satellite phone.

SIM cards store secure network specific information used to authenticate and identify subscribers on the telecommunication network. These are the Integrated Circuit Card IDentity (ICCID), the IMSI, authentication key (Ki), Local Area Identity (LAI) and operator-specific emergency number. These information items are necessary to be able to start the phone and for identification to the telecommunication network.

The SIM card also stores other carrier specific data such as the Short Message Service Center number (SMSC), Service Provider Name (SPN) Service Dialing Numbers (SDN), Advice-Of-Charge parameters and Value Added Service (VAS) applications.

A SIM card allows users to change phones by removing the SIM card from one mobile phone and inserting it into another mobile phone. This can however be quite difficult.

The difficulty of changing a SIM is a reason why dual SIM phones have been developed. Dual-SIM adapters are available that allow mobile phones to contain two SIMs, and to switch from one to the other as required. Some phones are designed to work with two SIMs, both of which may be active at the same time. Dual-SIM operation of a mobile phone allows the use of two services without the need to carry two phones at the same time. For example, the same handset can be used for business and private use with separate numbers and bills; or for travel, with an additional SIM for the country visited, which can for instance be the case for truck drivers (e.g. using a car phone in a car that is used by multiple truck divers). Also families with only one phone will face this problem, every time another person wants to use the phone, and the billing should e.g. be separate. Also in the case that multiple services are offered by separate telecommunication providers like mobile TV, payment transactions, internet, voice and etcetera, every single service can only be used after replacing the SIM card.

In these cases the problem remains that it can be quite difficult to change the SIMs in a single or dual SIM phone.

EP 1068753 discloses a remote communication apparatus that holds at least one standard SIM card and is directly connected to a mobile phone. When interrogation with respect to the identification of a networks provider subscriber is received on a mobile phone, the inquiry signal is directed to the SIM card and a reply is provided. This allows using the phone at a mobile telecommunication network.

The remote communication apparatus can hold more than one SIM card that may be directly connected to interfaces of the apparatus. This makes it possible to use the remote communication apparatus e.g. as a "dual SIM" device, when two SIM cards are directly connected to an interface.

Also an alternative external embodiment is disclosed, with a flexible ribbon cable directly connected to the SIM card socket in the mobile phone. Because of the flexible ribbon cable connection, which is connected below the mobile phone's battery, it will be difficult to replace the external attachment. A connected attachment allows for the SIM interfaces to be placed outside of the mobile phone hardware. This makes it less difficult to change the SIM cards at the external interfaces in the attachment, but also here the problem remains that changing one or more SIM cards in the remote communication apparatus can be quite complex.

### Problem description

The problem that remains is that it will be quite complex and time consuming to change the SIM card (or SIM cards) for one or more mobile phones. Every time a subscriber wants to start using a mobile phone that was previously in use by someone else, he is obliged to switch off the mobile phone and to manually replace the installed SIM card with his own SIM card. This makes it impractical to use a mobile phone by more than one subscriber and especially when there is a multitude of subscribers, it will be almost impossible. Also the temporary usage of more than one phone by one subscriber will be problematic. Also the enclosure of a SIM card is mechanically not designed to allow a SIM card to be swapped on a regular basis. Frequent changes will result in mechanical failures.

### Summary of the invention

The aim of the invention is to make it easy to a multitude of subscribers to use a single mobile phone.

Hereto a SIM transceiver is proposed in a device which is configured for connecting to a telecommunication network, comprising storing means, a SIM simulator and a data signal receiver. The data signal receiver is configured for receiving information from an external SIM smartcard and for storing the received information in the storing means. The SIM simulator is configured for retrieving information from the storing means and for authorizing the device in the telecommunication network.
After a mobile phone comprising the SIM transceiver is powered on, at first it can not operate properly (sometimes, this state of the mobile phone is referred to as "flight mode"). However when an external SIM smartcard is held close to the mobile phone to wirelessly connect to the SIM transceiver, the data signal receiver of the SIM transceiver can start communicating with the data signal transmitter of the external SIM smartcard. The external SIM smartcard comprises, besides the data signal transmitter, at least standard SIM card functionality with secure network specific information stored on it. During communication between SIM transceiver and external SIM smartcard, the secure network specific information can be sent to the data signal receiver of the SIM transceiver which can store this information in the storing means. With the secure network specific information stored in the storing means, the SIM simulator will now be able to retrieve this information and can use it for authentication to the telecommunication network.

So after a few seconds/moments, the mobile phone can be used by a different network subscriber that possesses an external SIM smartcard with standard SIM functionality and holds this smartcard close to the phone. After this short period of time, the SIM smartcard can be put away and the phone can operate (after standard pincode authorization, if required). With a standard short booting time, a mobile device comprising a SIM simulator can now be able to provide mobile communication to a multitude of different subscribers.

According to an aspect of the invention, the storing means consists of volatile memory. When the system is powered, the information is maintained in the volatile memory. On the other hand, the information will be lost when the power is removed. After a power down, the device will therefore no longer be able to communicate with the telecommunication network until an external SIM smartcard is held close again to the mobile phone.

According to an aspect of the invention, the SIM transceiver comprises a data signal receiver that uses the radio frequency identification (RFID) protocol for information exchange. The RFID application allows for unique codes to be used per mobile phone, and high speed communication. This makes the use of the SIM transceiver more reliable.

According to another aspect of the invention, the SIM transceiver comprises a data signal receiver that is based on near field communication (NFC) technology. NFC has been standardized by the GSM Association as "contact less technology" and is a smart form of RFID. NFC e.g. specifies bi-directional communication. According to another aspect of the invention, the SIM transceiver comprises a data signal receiver that is based on NFC technology and operates in secure mode.

According to another aspect of the invention, the SIM transceiver is part of a device configured for mobile telecommunication. The device can be any telecommunication network subscriber device, such as a mobile phone, a car phone, a fixed network phone, a satellite phone or a computer that is equipped for telecommunication.

According to yet another aspect of the invention, a server is located in a telecommunications network. The server comprises a subscriber database, which contains the subscribers that have paid for an authorization service. The authorization service is e.g. available to all subscribers that use a SIM transceiver. These subscribers can enter personal details into the subscriber database and they can enter a list of SIM transceivers with their intended identity and the times these are being able to be used in a subscriber authorization table. In this way the server can be used for remote identity authorization to mobile subscribers with one or more SIM transceivers.

Another aspect of the invention is a computer program to be run by a processor at the SIM transceiver, which comprises software code portions configured for performing the steps of:
- receiving the secure network information from the SIM smartcard;
- storing the secure network information into the storing means;
- getting from said storing means this secure network information, and
- using the secure network information for authorizing to the telecommunication network.

According to another aspect of the invention, the storing means comprise volatile memory.

### Brief description of the drawings

The invention will be explained in greater detail by reference to exemplary embodiments shown in the drawings, in which:
Fig. 1 shows a hardware layout of a subscriber identity module transceiver.
Fig. 2 shows a functional view of a subscriber identity module transceiver.
Fig. 3 shows a functional view of the memory in a subscriber identity module simulator.
Fig. 4 shows a mobile device with SIM simulator and an external SIM smartcard.
Fig. 5 shows a functional view of a server for remote identity management.

### Detailed description of the drawings

For the purpose of teaching of the invention, preferred embodiments of the method and system of the invention are described in the sequel. It will be apparent to the person skilled in the art that other alternative and equivalent embodiments of the invention can be conceived and reduced to practice without departing from the true spirit of the invention, the scope of the invention being only limited by the claims as finally granted.

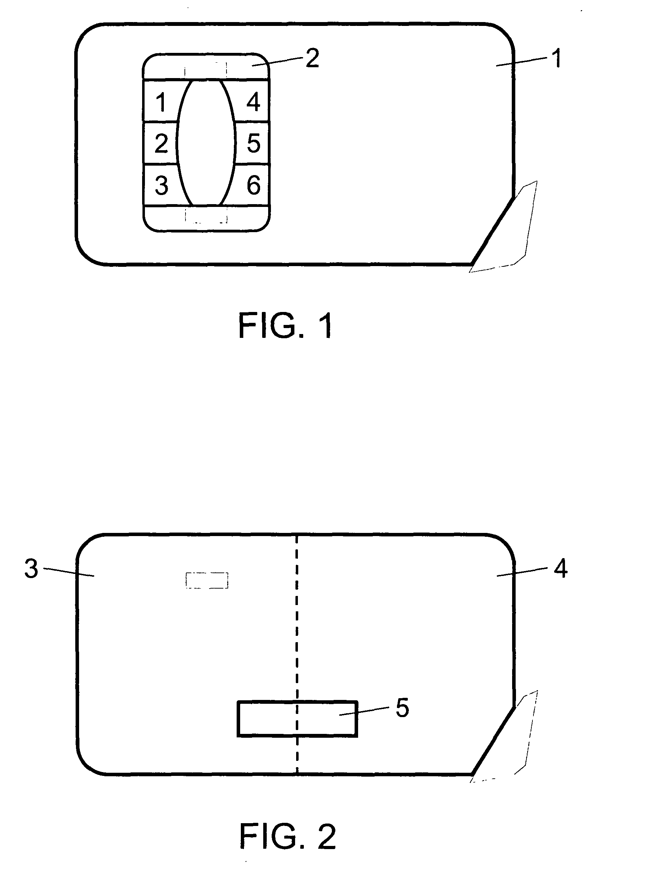

Fig. 1 shows an example of a hardware layout of a subscriber identity module (SIM) transceiver. The measure and interface contacts of the hardware 1 are equal to those of a standard SIM card (ISO 7816). The electrical contacts are indicated by 2. It should be appreciated that other models and sizes of SIM cards may be used.

Fig. 2 shows a functional view of a SIM transceiver. The SIM transceiver contains a SIM simulator as indicated by 3, a data signal receiver as indicated by 4 and storing means as indicated by 5. The SIM simulator 3 simulates the behavior of a standard SIM card to the hardware interface. The data signal receiver 4 can send and receive data to and from another data signal transmitter that is held in short range of the data signal receiver 4, and can store information received in the storing means 5.

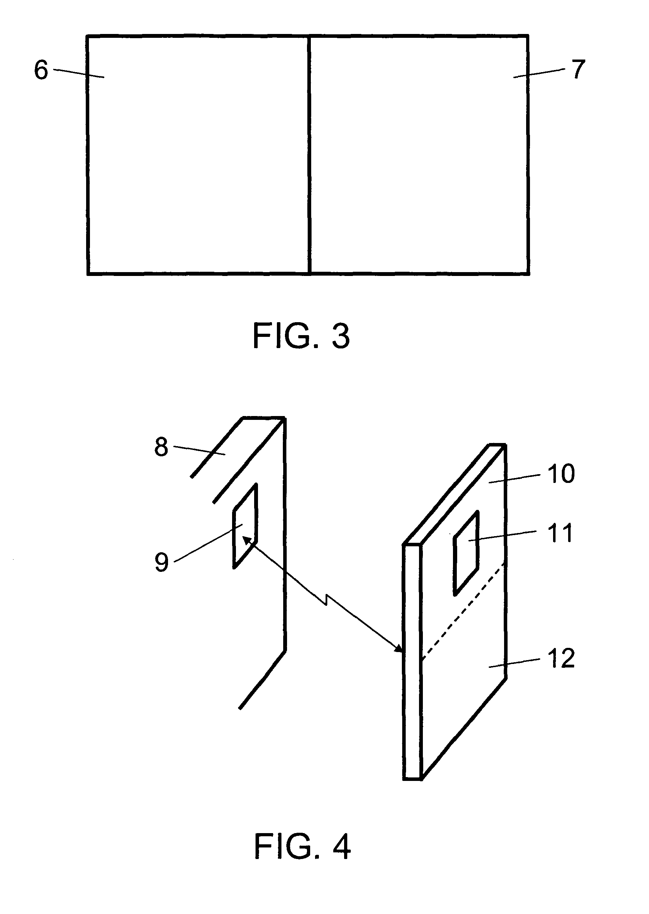

Fig. 3 shows a functional view of the storing means in a SIM transceiver. In the embodiment shown the storing means are a memory, which contains a volatile part 6 and a non-volatile part 7. The volatile part 6 stores secure network information necessary for phone startup, authorizing and maintaining the ongoing connection with and through a telecommunications network. The volatile part 6 loses the stored information when the mobile phone is switched off.

The non-volatile part 7 stores other information items that can be downloaded per external SIM card. This information stays available after power-down of the mobile phone, but can be erased by the SIM card user. In an embodiment of the invention, the mobile phone will ask for a four-number pincode and a SIM card number when the download starts. The download will start after correct pincode and the pincode and SIM card number are associated with the downloaded information. Every time a SIM smartcard with the same SIM card is held close to the mobile phone, the same SIM card number and pincode must be entered for the download to continue. When a SIM card user wants to erase the stored information in non-volatile memory, he has to choose the SIM card number and enter the correct pincode. When the pincode is correct the non-volatile memory is cleared for that SIM card number. The information downloaded for other SIM cards stays available in non-volatile memory 7.

Fig. 4 shows a mobile device 8 with SIM simulator 9 and an external SIM smartcard 10. The SIM simulator 9 in the mobile phone is inside the phone and is not visible. The standard SIM card 11 in the SIM smartcard 10 is also placed inside and is also not visible. After switching on the mobile phone, the SIM smartcard 10 is held close to the phone, e.g. closer than 20 cm, in order to establish a wireless link. Depending on the technology used, like e.g. RFID or NFC, the distance between the SIM smartcard and the SIM transceiver is small. For example, in the case of NFC the distance should be very small, almost in "touching range".

At the time the data signal receiver of the SIM transceiver and the data signal transmitter 12 of the SIM smartcard have established a wireless link, the secure network information is downloaded to the SIM transceiver 9. The data signal receiver in the SIM transceiver 9 stores the secure network information into volatile memory. Now the phone can be used by the network subscriber e.g. for telecommunication and the SIM smartcard can be removed.

When the SIM smartcard 10 stays at short range, subsequently also the other carrier specific data is transferred to the data signal receiver of the SIM transceiver 9 and it is stored in non-volatile memory.

The sending and receiving of secure network information and other carrier specific information is made possible by e.g. a radio frequency identification (RFID) protocol. With unique codes for the sender and receiver, which are the data transmitter and data receiver, this makes the data transfer more reliable.

In another embodiment of the invention, the SIM transceiver contains a near field communication (NFC) data signal receiver. NFC has been standardized by the GSM Association as "contact less technology" and it is a smart form of RFID. NFC e.g. specifies bi-directional communication and can operate in a secure mode. It is likely that new NFC formats will be standardized, that also will be able to allow data transfer from transmitter to receiver as indicated above.

In another embodiment the SIM smartcard does not contain a standard SIM card, but is e.g. a "normal" smartcard, which comprises the secure network information, other carrier specific information and all other SIM functionalities. This is e.g. the case when a network provider has taken care of loading a number of smartcards with the relevant information.

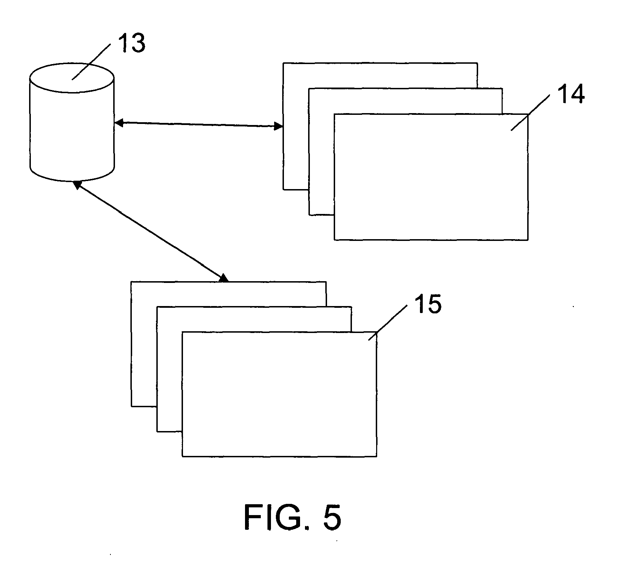

In Fig. 5 a server for remote identity management is shown. In the embodiment shown, a server with a subscriber database 13 is located in a telecommunications network. The subscriber database contains the subscribers that have paid for an authorization service. This remote identity management is available to all subscribers that use one or more SIM transceiver(s). The subscribers can enter personal details into the subscriber database in subscriber list 14, and they can enter a list of SIM transceivers with their intended identity and the times these are being able to be used in a subscriber authorization table 15.

In this way the server can be used for remote identity authorization to mobile subscribers with one or more SIM transceivers.

## Claims

1. A SIM transceiver for use in a device configured for connecting to a telecommunication network, the SIM transceiver comprising storing means, a SIM simulator and a data signal receiver, the data signal receiver being configured for receiving information from an external SIM smartcard and storing said received information in said storing means and the SIM simulator being configured for retrieving said information from said storing means and authorizing to the telecommunication network using said retrieved information.

2. A SIM transceiver as in claim 1, with the storing means consisting of volatile memory.

3. A SIM transceiver as in claim 1 or 2 comprising a radio frequency identification (RFID) data signal receiver.

4. A SIM transceiver as in the preceding claims, comprising a near field communication (NFC) data signal receiver.

5. A SIM transceiver as in claim 4 comprising a secure near field communication data signal receiver.

6. A device configured for mobile telecommunication comprising the SIM transceiver according to the preceding claims.

7. A server for use in a telecommunications network comprising a subscriber database and a subscriber authorization table, the server being configured for remote identity authorization to mobile subscribers.

8. A computer program comprising software code portions configured for, when run by a processor, to perform the steps of:
- receiving the secure network information;
- storing said secure network information in the storing means;
- getting from said storing means said secure network information;
- using said secure network information for authorizing to the telecommunication network.

9. A computer program as in claim 8, with the memory means comprising volatile memory.
